# EUROPÄISCHE PATENTSCHRIFT

(11) **EP 2 735 042 B1**
(45) Veröffentlichungstag und Bekanntmachung des Hinweises auf die Patenterteilung: **24.10.2018**
(21) Anmeldenummer: 12735861.2
(22) Anmeldetag: 12.07.2012
(51) Int. Cl.: H01M 2/20, H01M 10/6553, H01M 10/653, H01M 10/6551, H01M 10/655, H01M 10/656, H01M 10/052

(54) **ENERGIESPEICHERMODUL**
ENERGY STORAGE MODULE
MODULE ACCUMULATEUR D'ÉNERGIE

(30) Priorität: 19.07.2011 DE 102011079394
(43) Veröffentlichungstag der Anmeldung: 28.05.2014
(73) Patentinhaber: Siemens Aktiengesellschaft, 80333 München (DE)
(72) Erfinder: GEBHARD, Bruno, 91301 Forchheim (DE); HUBER, Norbert, 91056 Erlangen (DE); MEINERT, Michael, 91056 Erlangen (DE); RECHENBERG, Karsten, 91077 Dormitz (DE)
(86) Internationale Anmeldenummer: PCT/EP2012/063695
(87) Internationale Veröffentlichungsnummer: WO 2013/010912

(56) Entgegenhaltungen:
- WO-A2-2010/031856
- DE-A1-102008 010 808
- DE-A1-102009 035 465
- US-A- 5 871 861

## Beschreibung

Die Erfindung bezieht sich auf ein Energiespeichermodul nach dem Oberbegriff des Patentanspruches 1.

Derartige Energiespeichermodule sind zur Aufnahme und Abgabe von elektrischer Energie für den Betrieb unterschiedlichster Fahrzeuge, wie z.B. Schienenfahrzeuge, Trucks, Busse, Schiffe, Kräne und andere Spezialfahrzeuge mit Dieselmotoren, aber auch in stationären Energiespeichern einsetzbar. Unterschiedliche Betriebsarten, wie Energie sparen durch Nutzung von Bremsenergie, Spannung stabilisieren, als Kurzzeitspeicher oder zum oberleitungslosen Fahren, sowie unterschiedliche Kühlungsarten als auch die Anpassung von Strom und Spannung an den Einsatzfall, ergeben flexible Einsatzmöglichkeiten.

Aus der DE-Produktinformation "Sitras ESM 125: Energiespeichermodul für mobile und stationäre Anwendungen", herausgegeben 2010 von Siemens AG unter der Nr. A6Z00023425080, ist ein solches Energiespeichermodul bekannt, welches als Speicherzellen nebeneinander angeordnete elektrische Doppelschicht-Kondensatoren mit zylindrischer Bauform verwendet, die in ein gekapseltes Modulgehäuse aus Aluminium eingebaut sind. Das Energiespeichermodul ist mit einer luft- oder wassergekühlten Kühleinrichtung an einer Seite oder an zwei gegenüber liegenden Seiten des Modulgehäuses ausgerüstet. Die Speicherzellen sind über Brückenglieder elektrisch in Reihe geschaltet und thermisch an einen Kühlkörper der Kühleinrichtung angebunden.

Der Erfindung liegt die Aufgabe zugrunde, ein Energiespeichermodul der eingangs genannten Art bereitzustellen, welches eine verbesserte Kühleinrichtung aufweist, um die Lebensdauer von Speicherzellen und damit des gesamten Energiespeichermoduls zu verlängern.

Die Aufgabe wird gelöst durch ein gattungsgemäßes Energiespeichermodul mit den Merkmalen des kennzeichnenden Teils des Patentanspruches 1. Demnach ist der Anschlussleiter derart ausgebildet und angeordnet ist, dass in ihm entstehende Wärmeenergie abführbar ist. Ein wesentlicher Teil der Erfindung liegt in der Erkenntnis, dass eine ungleichmäßige Kühlung zu Temperaturdifferenzen zwischen den Speicherzellen führt; dabei genügen bereits Temperaturerhöhungen von 5 K, um die Lebensdauer dieser im Vergleich zu anderen Speicherzellen und damit des gesamten Energiespeichermoduls deutlich zu verringern. Um eine hohe Temperaturkonstanz aller Speicherzellen zu erreichen, werden erfindungsgemäß nicht nur die Speicherzellen selbst gekühlt, sondern auch die vermeintlich unwichtigen Anschlussleiter zwischen den Modulanschlüssen und der ersten beziehungsweise letzten Speicherzelle des Energiespeichermoduls. Durch ein Abführen auch der an den Modulanschlüssen und den Anschlussleitern entstehende Wärmeenergie wird eine gleichmäßigere Temperierung aller Speicherzellen und mithin eine Erhöhung der Lebensdauer des Energiespeichermoduls erzielt.

Im erfindungsgemässen Energiespeichermodul ist der Anschlussleiter als starre Stromschiene mit einer ebenen Kühlfläche ausgebildet, die über eine elektrisch isolierende und thermisch leitfähige Zwischenschicht an einen Kühlkörper der Kühleinrichtung anliegend angeordnet ist. Beispielsweise kann die Stromschiene als Winkelstück aus Aluminium oder Kupfer ausgeführt sein, dessen Querschnitt hinreichend groß dimensioniert ist. Die Kühlfläche kann durch die ebene großflächige Oberfläche eines Winkelschenkels gebildet werden, die am Kühlkörper der Kühleinrichtung anliegt. Die Zwischenschicht sorgt für eine elektrische Isolierung bei thermischer Leitfähigkeit zwischen Stromschiene und Kühlkörper. Der Kühlkörper kann sich beispielsweise über eine Gehäusewand des kastenförmigen Modulgehäuses erstrecken und durch Luft oder Wasser gekühlt werden.

In einer Ausgestaltung eines Energiespeichermoduls (nicht Teil der Erfindung) ist der Anschlussleiter als starre Stromschiene mit ihre Oberfläche vergrößernden Strukturelementen ausgebildet, die einem im Modulgehäuse eingeschlossenen Kühlluftreservoir oder einem das Modulgehäuse durchsetzenden Kühlluftstrom ausgesetzt angeordnet ist. Die Oberfläche der Stromschiene kann beispielsweise durch als Kühlrippen oder Kühlbohrungen ausgebildete Strukturelemente vergrößert werden, um den Wärmeübergang von Stromschiene zur Kühlluft zu verbessern. Die Kühlluft kann das Modulgehäuse durchströmen oder im Modulgehäuse als eingeschlossenes Reservoir Wärmeenergie aufnehmen und vom der Stromschiene und damit von der ersten bzw. letzten der in Reihe geschalteten Speicherzellen abtransportieren.

In einer Ausgestaltung eines Energiespeichermoduls (nicht Teil der Erfindung) ist der Anschlussleiter als flexibles Stromkabel ausgebildet, das wenigstens teilweise an einen Kühlkörper der Kühleinrichtung anliegend angeordnet ist. Das Stromkabel kann beispielsweise schraubenlinienartig um einen in das Modulgehäuse hineinragende Fortsetzung des Kühlkörpers der Kühleinrichtung gewunden sein, um eine möglichst große Wärmeaustauschfläche zwischen Stromkabel und Kühlkörper zu erzielen.

Weitere Eigenschaften und Vorteile der Erfindung ergeben sich aus nachfolgender Beschreibung von Ausführungsbeispielen anhand der Zeichnungen, in deren
FIG 1 ein Querschnitt durch ein erstes Ausführungsbeispiel des erfindungsgemäßen Energiespeichermoduls,
FIG 2 ein Querschnitt durch ein zweites Ausführungsbeispiel eines Energiespeichermoduls (nicht Teil der Erfindung),
FIG 3 ein Querschnitt durch ein drittes Ausführungsbeispiel eines Energiespeichermoduls (nicht Teil der Erfindung),
FIG 4 ein Querschnitt durch ein viertes Ausführungsbeispiel eines Energiespeichermoduls (nicht Teil der Erfindung), schematisch veranschaulicht ist.

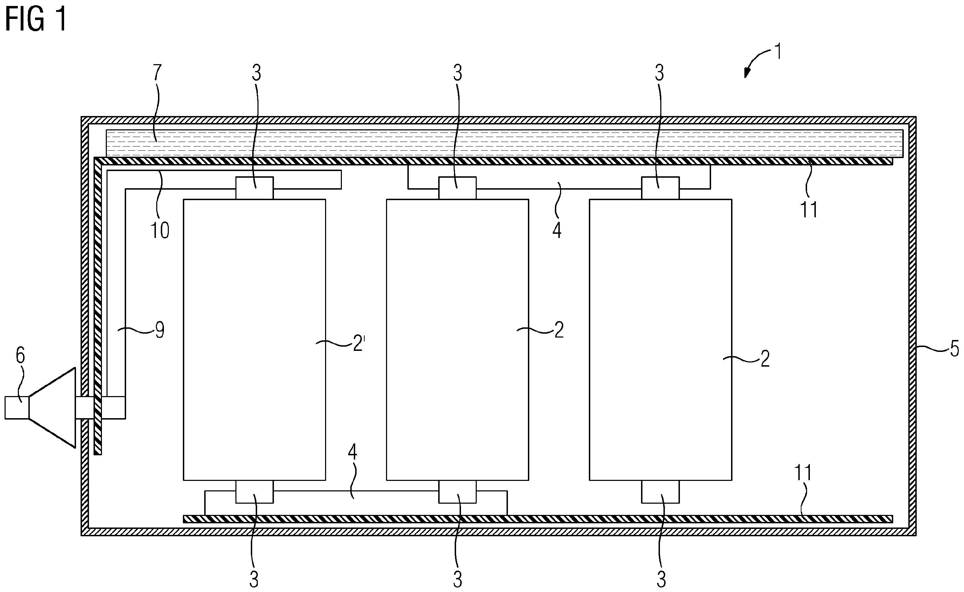

Gemäß FIG 1 bis FIG 4 weist ein Energiespeichermodul 1 mehrere Speicherzellen 2', 2 auf, die beispielsweise als elektrische Doppelschicht-Kondensatoren oder als Lithium-Ionen-Batterien ausgeführt sind. Die Speicherzellen 2', 2 besitzen typischerweise eine maximale elektrische Spannung von nur wenigen Volt. Zur Bereitstellung einer nutzbaren Nennspannung von beispielsweise 120 bis 125 Volt DC werden 24 Doppelschicht-Kondensatoren elektrisch in Reihe geschaltet und zu einem Energiespeichermodul 1 gepackt. Die zylindrisch ausgebildeten Speicherzellen 2', 2 weisen zwei stirnseitig gegenüberliegend angeordnete Zellpole 3 auf, an welchen je zwei benachbarte Speicherzellen 2', 2 elektrisch miteinander verbindende Brückenglieder 4 befestigt sind. Die Speicherzellen 2', 2 sind schwingungs- und schockfest in einem gekapselten Modulgehäuse 5 angeordnet. Das beispielsweise aus Aluminium gefertigte Modulgehäuse 5 ist kastenförmig ausgebildet und mit einer Kühleinrichtung zur Aufnahme und Abfuhr von Wärmeenergie ausgerüstet. Zur elektrischen Kontaktierung des Energiespeichermoduls 1 sind am Modulgehäuse 5 zwei als Polklemmen ausgebildete Modulanschlüsse 6 beispielsweise an einer schmalen Seitenwand angeordnet. Die Modulanschlüsse 6, von denen in den Figuren nur einer dargestellt ist, sind über Anschlussleiter elektrisch mit der ersten bzw. letzten Speicherzelle 2' der Reihenschaltung verbunden. Hierdurch werden alle Speicherzellen 2', 2 sowie die Modulanschlüsse 6 und die Brückenglieder 4 im Betrieb vom selben Strom durchflossen. Diese stromführenden Brückenglieder 4 und Modulanschlüsse 6 besitzen, bedingt durch ihren Querschnitt und durch die Verbindungstechnik, wie etwa Schraubung, Pressung oder Schweißung, einen nicht zu vernachlässigenden elektrischen Widerstand, der teilweise im Bereich des Innenwiderstandes der Speicherzellen 2', 2 selbst liegt. Durch diesen elektrischen Widerstand und den unverzweigten elektrischen Strom kommt es zu einer Erwärmung dieser stromführenden Teile 4, 6 sowie der jeweils angebundenen Speicherzellen 2'.

Die Kühleinrichtung in den in FIG 1, 3 und 4 dargestellten Ausführungsbeispielen ist als wasser- oder luftgekühlter Kühlkörper 7 ausgebildet, der sich über eine den Zellpolen 3 der Speicherzellen 2', 2 zugewandten Seitenwand des Modulgehäuses 5 erstreckt. Die gegenüber liegende Seitenwand kann ebenfalls mit einem Kühlkörper versehen sein. In den Speicherzellen 2', 2 entstehende Wärmeenergie wird über die Brückenglieder 4 an den Kühlkörper 7 abgegeben. Zwischen dem Kühlkörper 7 und den Brückengliedern 4 ist hierzu eine thermisch leitende Zwischenschicht 11 eingelegt, die elektrisch isolierend ausgebildet ist. Die Zwischenschicht 11 wird vorzugsweise durch ein so genanntes GapPad - einer teigartig formbaren Folie mit hoher Wärmeleitfähigkeit und hoher elektrische Isolationsfestigkeit - gebildet. Bei zweiseitiger Kühlung werden alle bis auf die erste und die letzte Speicherzelle 2' der in Reihe geschalteten Speicherzellen 2', 2 über Brückenglieder 4 von zwei Seiten gekühlt, so dass die erste und letzte Speicherzelle 2' gesondert temperiert wird, um eine einheitliche Zellentemperatur einzustellen. Hierzu werden erfindungsgemäß die Anschlussleiter derart ausgebildet und angeordnet, dass in ihm entstehende Wärmeenergie abführbar ist.

Gemäß dem in FIG 1 dargestellten Ausführungsbeispiel ist der oder sind die Anschlussleiter als starre Stromschiene 9 mit einer ebenen Kühlfläche 10 ausgebildet. Die Stromschiene 9 ist beispielsweise als elektrisch leitendes Winkelstück aus Aluminium oder Kupfer ausgeführt, das zumindest mit einer die Kühlfläche 10 bildenden Winkelflanke am Kühlkörper 7 der Kühleinrichtung anliegt. Dazwischen ist die elektrisch isolierende und thermisch leitfähige Zwischenschicht 11 eingelegt. Weitere blanke Teile der Stromschiene 9 sind elektrisch gegen das Modulgehäuse 5 und alle anderen Bauteile mit abweichendem Potential isoliert. Hierzu dient ebenfalls die Zwischenschicht 11. Durch die Anbindung der Stromschiene 9 an die Kühleinrichtung können auch die ersten bzw. letzten Speicherzellen 2' auf dem gleichen Temperaturniveau gehalten werden, wie die restlichen Speicherzellen 2.

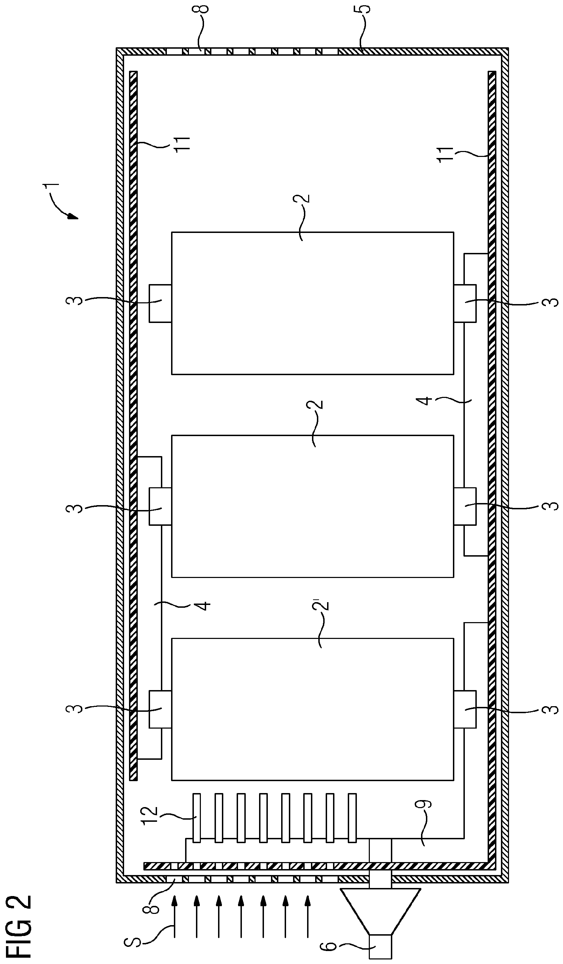

In dem Ausführungsbeispiel gemäß FIG 2 wird die Kühleinrichtung durch einen erzeugten Kühlluftstrom S gebildet, der durch Kühlluftschlitze 8 in gegenüber liegenden Seitenwänden des Modulgehäuses 5 in dieses ein- beziehungsweise daraus wieder ausströmt. Zur effektiven Abgabe von Wärmeenergie an den das Modulgehäuse 5 durchsetzenden Kühlluftstrom S weist der als starre Stromschiene 9 ausgebildete Anschlussleiter Kühlrippen 12 oder Kühlbohrungen zur Vergrößerung der Oberfläche auf.

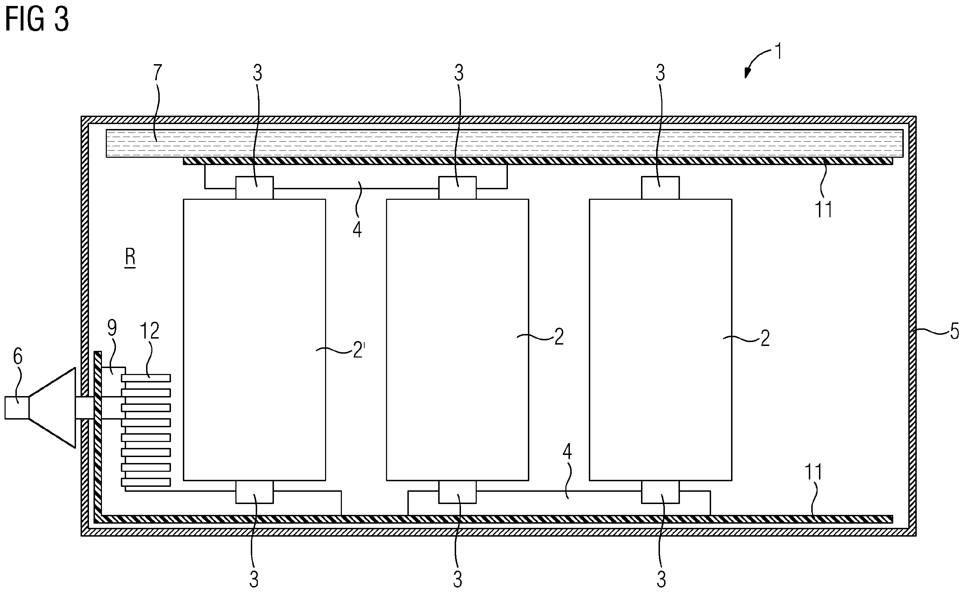

Alternativ kann wie im Ausführungsbeispiel gemäß FIG 3 die als Winkelstück mit Kühlrippen 12 ausgebildete Stromschiene 9 die Wärmeenergie an ein im Modulgehäuse 5 eingeschlossenes Kühlmittelreservoir R abgeben, welches durch den Kühlkörper 7 der Kühleinrichtung fortwährend erneuert wird.

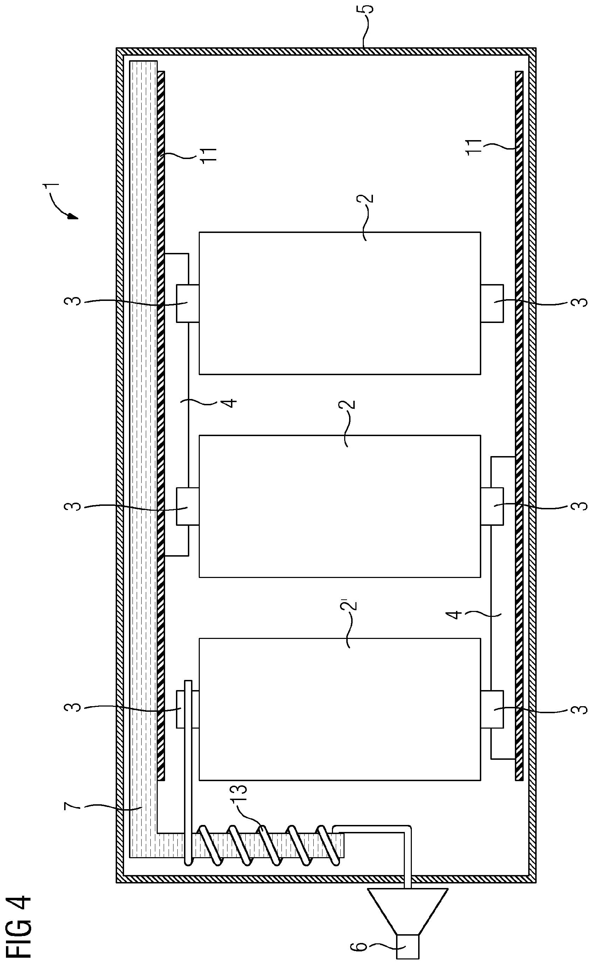

In der in FIG 4 dargestellten Ausführungsform ist der oder sind die Anschlussleiter als flexibles Stromkabel 13 ausgeführt. Zur Bildung einer großen Wärmeaustauschfläche ist das Stromkabel 13 um einen in das Modulgehäuse 5 hineinragenden Kühlfinger des Kühlkörpers mehrmals schraubenlinienartig gewunden. Alternativ kann das Stromkabel 13 auch um ein Anschlussrohr des Kühlkörpers 7 gewickelt sein.

Insgesamt werden erfindungsgemäß nicht nur die Speicherzellen 2', 2 selbst gekühlt, sondern auch die vermeintlich unwichtigen Anschlussleiter des Energiespeichermoduls 1, um die an den Modulanschlüssen 6 und den Anschlussleitern entstehende Wärmeenergie ebenfalls abzufangen und um damit eine gleichmäßigere Temperierung der Speicherzellen 2', 2 zu erreichen.

## Patentansprüche

1. Energiespeichermodul (1), umfassend mehrere elektrisch in Reihe geschaltete Speicherzellen (2', 2) für elektrische Energie, ein die Speicherzellen (2', 2) umschließendes Modulgehäuse (5), einen am Modulgehäuse (5) angeordneten Modulanschluss (6) zur externen elektrischen Kontaktierung der Speicherzellen (2', 2), einen den Modulanschluss (6) mit einer ersten der in Reihe geschalteten Speicherzellen (2', 2) elektrisch verbindenden Anschlussleiter und eine mit den Speicherzellen (2', 2) thermisch gekoppelte Kühleinrichtung zur Aufnahme und Abfuhr von Wärmeenergie, wobei der Anschlussleiter derart ausgebildet und angeordnet ist, dass in ihm entstehende Wärmeenergie abführbar ist, **dadurch gekennzeichnet, dass** der Anschlussleiter als starre Stromschiene (9) mit einer ebenen Kühlfläche (10) ausgebildet ist, die über eine elektrisch isolierende und thermisch leitfähige Zwischenschicht (11) an einen Kühlkörper (7) der Kühleinrichtung anliegend angeordnet ist.

## Claims

1. Energy storage module (1), comprising a plurality of storage cells (2', 2), which are connected electrically in series, for electrical energy, a module housing (5) which encloses the storage cells (2', 2), a module connection (6), which is arranged on the module housing (5), for making external electrical contact with the storage cells (2', 2), a connection conductor which electrically connects the module connection (6) to a first of the storage cells (2', 2) which are connected in series, and a cooling device, which is thermally coupled to the storage cells (2', 2), for absorbing and discharging thermal energy, wherein the connection conductor is designed and arranged in such a way that thermal energy which is created in it can be discharged, **characterized in that** the connection conductor is in the form of a rigid busbar (9) with a planar cooling face (10) which is arranged so as to bear against a heat sink (7) of the cooling device by means of an electrically insulating and thermally conductive intermediate layer (11).

## Revendications

1. Module (1) d'accumulateur d'énergie, comprenant plusieurs cellules (2', 2) d'accumulateur d'énergie électrique montées électriquement en série, un boîtier (5) de module enveloppant les cellules (2', 2) d'accumulateur, une borne (6) de module montée sur le boîtier (5) de module pour la mise en contact électrique extérieure des cellules (2', 2) d'accumulateur, un conducteur de connexion reliant électriquement la borne (6) du module à une première des cellules (2', 2) d'accumulateur montées en série et un dispositif de refroidissement couplé thermiquement aux cellules (2', 2) d'accumulateur pour absorber et évacuer de l'énergie calorifique, le conducteur de connexion étant constitué et disposé de manière à pouvoir évacuer de l'énergie calorifique créée en lui, **caractérisé en ce que** le conducteur de connexion est constitué sous la forme d'une barre (9) de courant rigide, ayant une surface (10) de refroidissement plane, qui est disposée en s'appliquant à un dissipateur (7) de chaleur du dispositif de refroidissement par l'intermédiaire d'une couche (11) intermédiaire isolante du point de vue électrique et conductrice de la chaleur.
